# EUROPÄISCHE PATENTSCHRIFT

(11) **EP 1 240 628 B1**
(45) Veröffentlichungstag und Bekanntmachung des Hinweises auf die Patenterteilung: **16.06.2004**
(21) Anmeldenummer: 00991052.2
(22) Anmeldetag: 27.11.2000
(51) Int. Cl.: G07F 7/10

(54) **VERFAHREN ZUR AUSWAHL UND BEZAHLUNG VON WAREN MIT EINEM MOBILEN ENDGERÄT**
METHOD OF SELECTION AND PAYMENT OF GOODS BY MEANS OF A MOBILE TERMINAL
PROCEDE POUR LA SELECTION ET LE PAIEMENT DE MARCHANDISES A L'AIDE D'UN TERMINAL MOBILE

(30) Priorität: 21.12.1999 DE 19961793
(43) Veröffentlichungstag der Anmeldung: 18.09.2002
(73) Patentinhaber: SIEMENS AKTIENGESELLSCHAFT, 80333 München (DE)
(72) Erfinder: RAMMIG, Ralf, 81739 München (DE)
(86) Internationale Anmeldenummer: PCT/DE2000/004220
(87) Internationale Veröffentlichungsnummer: WO 2001/046920

(56) Entgegenhaltungen:
- EP-A- 0 780 802
- EP-A- 0 848 360
- EP-A- 0 950 968
- WO-A-98/11519
- PATENT ABSTRACTS OF JAPAN vol. 1997, no. 01, 31. Januar 1997 (1997-01-31) & JP 08 249530 A (SANYO ELECTRIC CO LTD), 27. September 1996 (1996-09-27)
- "DIALOG GALE GROUP PR" DIALOG GALE GROUP PR, XP002932298

## Beschreibung

### Fachgebiet der Erfindung

Der Anteil der Mobiltelefonie ist in den letzten Jahren stetig gewachsen. Viele Telefonkunden haben inzwischen neben ihrem herkömmlichen Telefonanschluß noch ein Mobiles Endgerät - für dienstliche und / oder private Nutzung.
Um noch weitere Kunden hinzuzugewinnen und das mobil-telefonieren attraktiver zu gestalten, werden von den Netzanbietern immer neue Telekommunikationsdienste angeboten. Ein wesentlicher Aspekt ist dabei auch die Vergebührung, Dienstangebote können anhand von vielen Parametern (beispielsweise der Uhrzeit, der aktuellen Auslastung u.v.a.m.) beim Kunden vergebührt werden. Besonders erfolgreich ist inzwischen auch das sogenannte ,Prepaid Card' Angebot, und eine Telefonkarten-Anwendung bei der ein Guthaben auf ein Konto (dieses kann sich auch auf einer Chipkarte im Endgerät befinden) des Teilnehmers eingezahlt wird und die auflaufenden Gebühren von diesem dann abgebucht werden können.

### Stand der Technik

Aus WO 98/11519, ist ein Verfahren für eine "bargeldlose Bezahlung mit einem Mobilfunkgerät" bekannt. Das Verfahren ermöglicht es, mittels eines Mobilfunkgerätes, das eine multifunktionelle Chipkarte enthält, über ein Mobilfunknetz zu einem Geschäftsendgerät eine Verbindung aufzunehmen. Nach einer Bonitätsprüfung können dann auch größere Geldbeträge beglichen werden. Das Verfahren läuft komplett über das Mobilfunknetz ab und beschränkt sich auf die Beschreibung des reinen Zahlungsvorganges, der über eine Kartenzentrale abgewickelt wird.

Aus der Druckschrift WO 98/37524 ist bereits ein Transaktions-Verfahren zur Übermittlung von Aufträgen an einen Verkaufsautomaten bekannt. Bei dem beschriebenen Verfahren wird eine Verbindung von dem Endgerät über eine Funkschnittstelle zu dem Verkaufsautomat und von dort weiter zu einer Clearing Einheit und einem Finanzserver aufgebaut. Sämtliche Daten der Transaktion werden so über den Verkaufsautomaten gesendet.

In der nachveröffentlichten DE 198 39 178 A1 wird ebenfalls ein Kommunikationssystem zur Unterstützung von Dienstleistungs- und/oder Warentransfer beschrieben. Über ein Mobiltelefon wird an ein Call Center eine Bestellung eingegeben, ein Beleg wird von dem Call Center an das Mobilfunk-System weitervermittelt, der Besteller gibt dann seine Berechtigung zum Bezug der Waren oder Dienstleistungen an einem Kundenterminal ein.

Es ist weiterhin bereits bekannt, dass auch Waren und Dienstleistungen, die über Telefondienste hinaus gehen, über die Telefonrechnung abgerechnet werden können. Viele Waren und Dienstleistungen können inzwischen bereits an Automaten "gekauft" werden, dies reicht beispielsweise von Benzin an der Tankstelle (bisher über EC oder Kreditkarte) über Fahrkarten, Visitenkarten, Pass-Fotos bis zu Briefmarken für meist sehr geringe Geldbeträge.
Ein weiteres bekanntes Beispiel ist ein Verkaufsautomat für Getränkedosen, so wie von dem norwegischen Mobilfunkbetreiber NetCom, in Kooperation mit dem Getränkehersteller Ringes und der Firma Siemens eingeführt, bei dem der Teilnehmer mit Hilfe seines Mobiltelefones die "Rufnummer" des Automaten anwählt und das gewünschte Getränk anfordert. Der Preis für dieses Getränk wird dann über die Telefonabrechnung eingezogen.

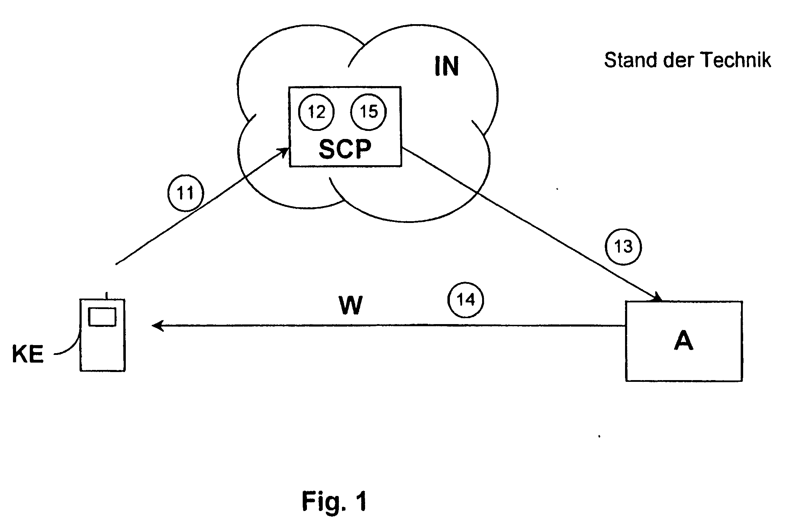

In Figur 1 ist ein System dargestellt, wie das diese Aufgabe technisch derzeit gelöst ist.
Die zu bestellende Ware W im Automaten A wird manuell durch die Eingabe einer Ziffernfolge (eine "Rufnummer" des Automaten, die mitunter recht lang sein kann) am Mobilfunkgerät KE ausgewählt 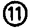 . Der Ruf wird über das Netz IN (ein Mobilfunknetz mit einem IN System, d. h. einer zusätzlichen Architektur nach ITU-T Q.1200 folgende) geleitet und dort wird eine Berechtigungsprüfung des Teilnehmers durchgeführt 12.

Danach kann z. B. bei einer erfolgreichen Prüfung die Bedienkonsole des Automaten freigegeben werden 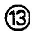 und der Teilnehmer die Auswahl am Automaten treffen. Die Ware wird dann von dem Automaten ausgegeben 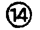 Dieser "Anruf" wird speziell vergebührt ("Premium Rate") 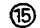 . Ist eine andere Zahlungsweise vereinbart, so wird die Gebühr beispielsweise von einer Geld-Karte oder einem Prepaid Konto abgebucht.

Dieses oben beschriebene Verfahren ist jedoch sehr starr. Die in dem Verkaufsautomaten enthaltenen Waren müssen alle den selben Preis haben, da ein "Anruf" bei dem Automaten fest vergebührt wird. Eine Auswahl des gewünschten Artikels über das Endgerät ist nur möglich, indem man für jeden der in dem Automaten enthaltenen Artikel eine separate Rufnummer einführt.

Aufgabe der Erfindung ist es, ein Verfahren zum Kauf bzw. Verkauf von Waren anzugeben, welches über ein mobiles Endgerät gesteuert wird, und welches die oben genannten Nachteile vermeidet.

### Darstellung der Erfindung

Diese Aufgabe wird gelöst durch ein Verfahren gemäß Patentanspruch 1 und ein Verfahren gemäß Patentanspruch 5.

Das bisher übliche Verfahren zum Betreiben eines Verkaufsautomaten wird ergänzt durch eine weitere Verbindung, im folgenden "erste Verbindung" genannt, die nicht über das normalerweise genutzte Mobilfunknetz und die darin enthaltenen Vermittlungs- und Steuerstellen führt. Sie wird realisiert durch eine zusätzliche, direkte Verbindung zwischen dem Endgerät (und damit dem kaufenden Teilnehmer) und dem Automaten. Während die Berechtigungsprüfung und die Belastung des Teilnehmerkontos mit dem Preis der Ware weiterhin über das Netz laufen, wird die Auswahl der Ware über die erste Verbindung, und damit direkt gesteuert.
Mit dem erfindungsgemäßen Verfahren werden die oben genannten Nachteile vermieden. Die Flexibilität des Warenangebots kann erhöht werden, beispielsweise durch neue Angebote, geänderte Verkaufspreise und besonders flexibel gestaltbare Verkaufspreise für die unterschiedlichen Waren. Weiterhin können Artikel, die temporär nicht im Angebot sind (weil beispielsweise ausverkauft), von der Auswahl dynamisch ausgeschlossen werden und, sobald nachgefüllt, wieder angeboten werden.
Für den Teilnehmer wird die Bequemlichkeit erhöht, da nicht mühsam jedesmal eine neue Nummer eingegeben werden muss.

Vorteilhafte Ausgestaltungen und Weiterbildungen sind in den Unteransprüchen angegeben.

Die neueren Mobilen Endgeräte sind inzwischen mit zusätzlichen Übertragungsschnittstellen ausgestattet. Dies ist beispielsweise eine Infrarot-Schnittstelle, wie in dem neuen Siemens "S25", mit deren Hilfe das Endgerät mit einem elektronischen Terminkalender (sogenannte Handhelds oder auch Palmtops) synchronisiert werden, Faxe senden und empfangen kann und andere Daten austauscht.
Ein bekannter Standard ist Bluetooth, welcher für kurze Distanzen, von 10 Zentimeter bis 100 Meter geeignet ist. Die Übertragung erfolgt mit 2.4 GHz im ISM (Industrial-Scientific-Medical) Band. Weitere Informationen sind auf der offiziellen Homepage (http://www.bluetooth.com) zu finden.
Eine geeignete Alternative dazu ist IrDA (Infrared Data Association), mit derzeit drei Kommunikationsstandards über Infrarot. Hier beträgt die Reichweite bis zu 1 Meter und die Übertragungsrate zwischen 9600 bps bis 16 Mbps. (Siehe dazu auch http://www.irda.org). Die Ausführung der erfindungsgemäßen Idee ist aber nicht auf diese beiden Standards beschränkt.
Die Daten-Übertragung über die erste Verbindung beinhaltet Angaben über die Angebote des Automaten, inklusive weiterer Angaben wie den Preis. Im Display des Endgerätes kann diese Auswahl dann angezeigt werden, vorteilhafterweise menügesteuert, so dass der Teilnehmer seine Auswahl einfach treffen kann. Nach durchgeführter Auswahl wird vom Endgerät sowohl über die erste Verbindung der Automat angesteuert als auch über die zweite Verbindung die Steuerung im Netz ausgelöst. Die Steuerung des Automaten soll weiterhin durch das Netz (welches somit die Identifikation des Teilnehmers übernimmt und die Security gewährleistet) erfolgen - eventuell noch die Aktivierung eines Ausgabefaches - die Freischaltung erfolgt aber über das Netz. Nach der Waren-Auswahl über das Menü wird die Netzverbindung zum Automat aufgebaut.

### Kurzbeschreibung der Zeichungen

Im folgenden wird die Erfindung anhand von Ausführungsbeispielen erläutert. Dabei zeigen
Figur 1 einen Stand der Technik, wie weiter oben beschrieben,
Figur 2 gegenüber Figur 1 eine erfindungsgemäße Lösung und
Figur 3 ein Aufruf-Szenario.

### Beschreibung der bevorzugten Ausgestaltungsformen

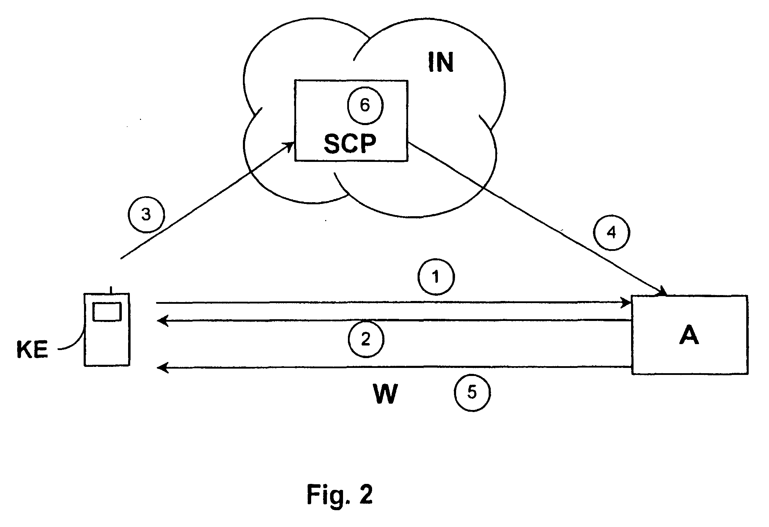

Figur 2 bildet nun das erfindungsgemäße Vorgehen in einer vereinfachten Darstellung ab.
Der Teilnehmer tritt über sein Endgerät KE zunächst über einen direkten Kommunikationskanal, bspw. Bluetooth, mit dem Automat in Verbindung ①. Über eine Menüauswahl kann der Teilnehmer nun die gewünschte Ware auswählen ②. Über diese Verbindung wird dann eine Bestellung der Ware initiiert, indem der Teilnehmer etwa über das Menü in seinem Endgerät "OK" anwählt und damit die Bezahlung der angegebenen Summe freigibt. Dabei wird eine erste Verbindung zu einer zentralen Instanz SCP in dem Mobilfunknetz aufgebaut ③, genauer gesagt ein Sprachkanal zum SSP, von diesem SSP wird dann eine Signalisierungsverbindung zum SCP aufgebaut. Eine Berechtigungsprüfung des Teilnehmers wird durchgeführt, und die Bestellung dann an den Automaten weitergeleitet ④. Diese Rufnummer kann auch zuvor bei der Datenübertragung zusammen mit den Informationen über Waren und Preise mitübertragen werden, so dass der Teilnehmer diese nicht mehr umständlich eingeben muß.

Die Ware wird nun von dem Automaten freigegeben ⑤ und die Verrechnung der Kosten geschieht entsprechend der üblichen Gebührenverrechnungen in dem Mobilfunknetz ⑥ über die Telefonrechnung oder durch Abbuchung vom Prepaid Konto.

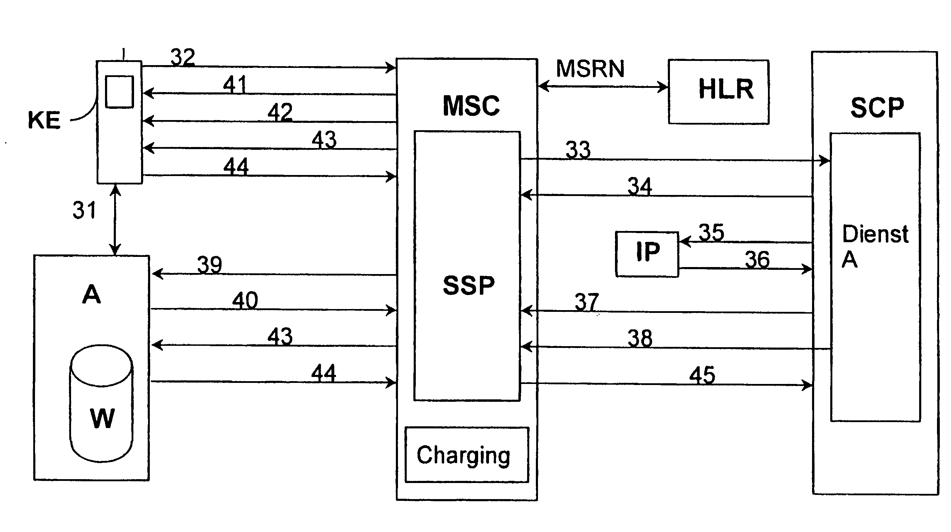

In Figur 3 wird das Szenario eines Kaufs noch einmal detaillierter dargestellt.
Neben den in Figur 1 und 2 bereits dargestellten Komponenten Automat A (mit Ware W), Mobiles Endgerät KE und die Dienstezentrale SCP (Service Control Point) sind hier noch dargestellt die Mobilvermittlungsstelle MSC (Mobile Switching Center, mit der Komponente Dienstvermittlungsstelle SSP, und der Vergebührungskomponente Charging) sowie eine weitere Instanz, die beispielsweise Ansagen im Netz abspielen kann (IP, Intelligent Peripheral). Weiterhin ist ein Teilnehmerverzeichnis HLR (Home Location Register) vorhanden.
Die Netzkomponenten SSP, SCP, IP sind hier angelehnt an die Technik der Intelligenten Netze, welche eine Architektur darstellen, zur Realisierung von sogenannten Mehrwertdiensten in einem Telekommunikationsnetz. Diese Technologie ist beschrieben in den Normen der ITU-T, Q.1200 folgende. Diese Einschränkung ist jedoch nicht erfindungswesentlich.

Der Teilnehmer nimmt mit seinem Endgerät KE eine direkte Verbindung 31 mittels der bereits weiter oben beschriebenen Technologie Bluetooth, IrDA oder einer anderen geeigneten drahtlosen Übertragungstechnik auf. Er wählt das gewünschte Getränk W aus und gibt sein OK für den Kauf.
Dadurch wird ein Ruf ausgelöst, 32 SETUP (A-Party Nr., B-Party Nr.), von dem Endgerät über das Mobilfunknetz. Über das HLR wird mit dem SSP die MSRN (mobile station roaming number) des Teilnehmers mitgeteilt. Der Verkaufsdienst (Dienst A) im SCP (der Dienstezentrale, die die Verwaltung und Ausführung der Dienste übernimmt und überwacht) wird durch die Rufnummer getriggert, 33:IDP(Dienst A, A-Party, B-Party). Wenn eine Ansage gespielt werden soll (z. B. Werbung), wird der SSP aufgefordert, die Nachricht an den IP weiterzuleiten, 34:
ConnectToResource. Der IP wird aufgefordert, die Ansage abzuspielen, 35. Nach Beendigung meldet er dies zurück, 36: SpecResourceReport.
Der SSP bricht danach die Verbindungsweiterleitung zum IP ab, 37: DisconnectForwardConnection.
Dienst A kann jetzt Berechtigungsprüfungen durchführen: Whitelist und Blacklist-Einträge werden jetzt überprüft: ist ein Teilnehmer für diesen Dienst zugelassen bzw. von diesem Dienst ausgeschlossen? Wird der Teilnehmer aufgrund dieser Überprüfung abgewiesen, kann ihm eine entsprechende Ansage gespielt werden.
Die gewählte Premium Rate Rufnummer des Automaten (B-Party) wird nun umgesetzt in eine reale Rufnummer und der SSP aufgefordert, die Verbindung aufzubauen, 38: CONNECT (B-Party'). Wahlweise kann ein Timer aufgesetzt werden, der garantiert, dass die Verbindung eine Mindestdauer aufweist, um die Vergebührung zu sichern.
Der Ruf wird regulär weitergeleitet, 39: SETUP, dabei wird ebenfalls die Roaming Number MSRN abgefragt.
Dem Teilnehmer wird der Verbindungsaufbauversuch in seinem Endgerät signalisiert, 41: ALERTING. Der Automat beantwortet das SETUP mit einem CONNECT, 40, damit ist eine Verbindung über das Mobilfunknetz hergestellt, 42: CONNECT.
Nach der abgelaufenen Zeit wird die Verbindung abgebrochen, 43: REL (Release), 44: RLC (Release Complete). Der Verbindungsabbau im Zusammenhang mit der Vergebührung wird zum Schluß an die Dienstezentrale gemeldet,
45:ApplyChargingResult (eventuell mit forcedRelease).

## Patentansprüche

1. Verfahren zum Verkauf von Waren an einem Verkaufsautomaten (A), bei dem
- der Teilnehmer über eine erste Verbindung **(1)**, **(2)**, welche zwischen dem Endgerät und dem Verkaufsautomaten direkt aufgebaut ist, von seinem mobilen Endgerät (KE) eine Auswahl an dem Automaten (A) trifft,
- der Verkaufsautomat (A) über eine zweite Verbindung **(3)** über ein Mobilfunknetz (IN) durch das mobile Endgerät (KE) eines Teilnehmers angewählt wird, und
- für die zweite Verbindung eine Berechtigungsprüfung **(6)** im Netz (SCP) durchgeführt wird, und
- nach erfolgreicher Berechtigungsprüfung der Verkaufsautomat (A) eine Mitteilung über das Ergebnis der Berechtigungsprüfung erhält **(4)** die ausgewählte Ware (W) ausgibt **(5)**

2. Verfahren nach Patentanspruch 1,
**dadurch gekennzeichnet, dass**
die Zahlung der Ware über den in dem Mobilfunknetz (IN) angewendeten Vergebührungsmechanismus veranlasst wird.

3. Verfahren nach Patentanspruch 1 oder 2,
**dadurch gekennzeichnet, dass**
die erste Verbindung (1), (2), zwischen dem Endgerät und dem Verkaufsautomaten direkt und mit Hilfe einer Übertragungsschnittstelle drahtlos geschieht.

4. Verfahren nach Patentanspruch 3,
**dadurch gekennzeichnet, dass**
es sich bei der ersten Verbindung **(1)**, **(2)**, um eine Übertragung mittels Bluetooth oder IrDA handelt.

5. Verfahren zum Kauf von Waren mit Hilfe eines Mobilen Endgerätes (KE) an einem Verkaufsautomaten (A), bei dem
- von dem Endgerät eine erste Verbindung **(1)**, über eine Schnittstelle zu dem Verkaufsautomaten (A) aufgebaut wird, und
- über die erste Verbindung eine Auswahl an dem Verkaufsautomaten getroffen wird **(2)**, und
- vom Endgerät (KE) eine zweite Verbindung über ein Mobilfunknetz (IN) zu dem Verkaufsautomaten (A) aufgebaut wird, **(3)**, **(4)**, und
- in dem Mobilfunknetz eine Berechtigungsprüfung durchgeführt wird, (6) und
- der Verkaufsautomat die gewählte Ware ausgibt **(W)**.

6. Verfahren nach Patentanspruch 5,
**dadurch gekennzeichnet, dass**
die erste Verbindung über Bluetooth oder IrDA aufgebaut wird.

7. Verfahren nach Patentanspruch 5 oder 6,
**dadurch gekennzeichnet, dass**
die Auswahl an dem Automaten über die erste Verbindung Menü-gesteuert erfolgt.

8. Verfahren nach Patentanspruch 7,
**dadurch gekennzeichnet, dass**
nur eine Auswahl von denjenigen Waren angeboten wird, die im Automaten zum Auswahlzeitpunkt verfügbar sind.

9. Verfahren nach Patentanspruch 7,
**dadurch gekennzeichnet, dass**
der Verkaufsvorgang durch Ansagen unterstützt wird.

10. Verfahren nach Patentanspruch 5 bis 9,
**dadurch gekennzeichnet, dass**
die Bezahlung der Ware gemeinsam mit der Vergebührung der zweiten Verbindung im Mobilfunknetz erfolgt.

11. Verfahren nach einem der vorhergehenden Patentansprüche,
**dadurch gekennzeichnet, dass**
die über die erste Verbindung übertragenen Informationen Angaben über die angebotenen Waren und/oder deren Preis enthalten.

12. Verfahren nach einem der vorhergehenden Patentansprüche,
**dadurch gekennzeichnet, dass**
die über die erste Verbindung übertragenen Informationen eine Rufnummer oder Teile einer Rufnummer enthalten, über welche der Automat oder die ausgewählte Ware in dem Automaten mit einer ersten Verbindung über das Mobilfunknetz angewählt wird.

## Claims

1. Method for purchasing goods from an automatic vending machine (A), in which
- the subscriber makes a selection on the automatic vending machine (A) via a first connection (1), (2), which is directly set up between the terminal and the automatic vending machine, from his mobile terminal (KE),
- the automatic vending machine (A) is selected via a second connection (3) via a mobile radio network (IN) by the mobile terminal (KE) of a subscriber, and
- an authorization check (6) is carried out for the second connection in the network (SCP), and
- following a successful authorization check, the automatic vending machine (A) receives (4) a message about the result of the authorization check and issues (5) the selected item (W).

2. Method according to Patent Claim 1,
**characterized in that**
the payment for the item is initiated via the charging mechanism used in the mobile radio network (IN).

3. Method according to Patent Claim 1 or 2,
**characterized in that**
the first connection (1), (2) between the terminal and the automatic vending machine is direct and takes place without wires by means of a transmission interface.

4. Method according to Patent Claim 3,
**characterized in that**
said method for the first connection (1), (2) comprises transmission by means of Bluetooth or IrDA.

5. Method for purchasing goods by means of a mobile terminal (KE) from an automatic vending machine (A), in which:
- a first connection (1) is set up from the terminal via an interface to the automatic vending machine (A), and
- a selection is made (2) from the automatic vending machine using the first connection, and
- a second connection is set up (3), (4) from the terminal (KE) via a mobile radio network (IN) to the automatic vending machine (A), and
- an authorization check is carried out (6) in the mobile radio network, and
- the automatic vending machine issues (W) the selected item.

6. Method according to Patent Claim 5,
**characterized in that**
the first connection is set up via Bluetooth or IrDA.

7. Method according to Patent Claim 5 or 6,
**characterized in that**
the selection from the automatic machine is made by menu control via the first connection.

8. Method according to Patent Claim 7,
**characterized in that**
the only goods which are offered for selection are those which are available in the automatic machine at the time of selection.

9. Method according to Patent Claim 7,
**characterized in that**
the vending process is assisted by announcements.

10. Method according to Patent Claims 5 to 9,
**characterized in that**
the item is paid for together with the charge for the second connection in the mobile radio network.

11. Method according to one of the preceding patent claims,
**characterized in that**
the information which is transmitted via the first connection contains details about the goods on offer and/or their price.

12. Method according to one of the preceding patent claims,
**characterized in that**
the information transmitted via the first connection contains a telephone number or parts of a telephone number, via which the automatic machine or the selected item in the automatic machine is selected using a first connection via the mobile radio network.

## Revendications

1. Procédé pour la vente de marchandises par un automate de vente (A), dans lequel
- l'abonné effectue une sélection sur l'automate (A) au moyen de son terminal mobile (KE) par l'intermédiaire d'une première connexion (1), (2), laquelle est établie directement entre l'appareil terminal et l'automate de vente,
- l'automate de vente (A) est appelé, par l'intermédiaire d'une seconde connexion (3), par le terminal mobile (KE) d'un abonné au moyen d'un réseau de radiocommunication mobile (IN),
- une vérification d'autorisation (6) est exécutée dans le réseau (SCP) pour la seconde connexion, et
- après la vérification d'autorisation réussie, l'automate de vente (A) reçoit un message concernant le résultat de la vérification d'autorisation (4), et sort la marchandise (W) sélectionnée (5).

2. Procédé selon la revendication 1,
**caractérisé en ce que**
le paiement de la marchandise est ordonné au moyen du mécanisme de taxation utilisé dans le réseau de radiocommunication mobile (IN).

3. Procédé selon la revendication 1 ou 2,
**caractérisé en ce que**
la première connexion (1), (2) entre le terminal et l'automate de vente est réalisée directement et sans fil à l'aide d'une interface de transmission.

4. Procédé selon la revendication 3,
**caractérisé en ce que**
la première connexion (1), (2) est une transmission au moyen de Bluetooth ou IrDA.

5. Procédé permettant d'acheter des marchandises à l'aide d'un terminal mobile (KE) à un automate de vente (A), dans lequel
- une première connexion (1) avec l'automate de vente (A) est établie par le terminal par l'intermédiaire d'une interface, et
- une sélection est exécutée sur l'automate de vente par l'intermédiaire de la première connexion (2), et
- une seconde connexion est établie avec l'automate de vente (A) par le terminal (KE) par l'intermédiaire d'un réseau de radiocommunication mobile (IN) (3), (4), et
- une vérification d'autorisation est réalisée dans le réseau de radiocommunication mobile (6), et
- l'automate de vente sort la marchandise sélectionnée (W).

6. Procédé selon la revendication 5,
**caractérisé en ce que**
la première connexion est établie par l'intermédiaire de Bluetooth ou IrDA.

7. Procédé selon la revendication 5 ou 6,
**caractérisé en ce que**
la sélection sur l'automate est effectuée en étant commandée par menu par l'intermédiaire de la première connexion.

8. Procédé selon la revendication 7,
**caractérisé en ce que**
seule une sélection des marchandises disponibles dans l'automate au moment de la sélection est proposée.

9. Procédé selon la revendication 7,
**caractérisé en ce que**
l'opération de vente est soutenue par des annonces.

10. Procédé selon les revendications 5 à 9,
**caractérisé en ce que**
le paiement de la marchandise est effectué dans le réseau de radiocommunication mobile en même temps que la taxation de la seconde connexion.

11. Procédé selon l'une quelconque des revendications précédentes,
**caractérisé en ce que**
les informations transmises par l'intermédiaire de la première connexion contiennent des indications sur les marchandises offertes et/ou sur leur prix.

12. Procédé selon l'une quelconque des revendications précédentes,
**caractérisé en ce que**
les informations transmises par l'intermédiaire de la première connexion contiennent un numéro d'appel ou des parties d'un numéro d'appel, au moyen duquel l'automate ou la marchandise sélectionnée est sélectionné(e) dans l'automate au moyen d'une première connexion par l'intermédiaire du réseau de radiocommunication mobile.
